# EUROPEAN PATENT SPECIFICATION

(11) **EP 3 298 529 B1**
(45) Date of publication and mention of the grant of the patent: **08.09.2021**
(21) Application number: 15726602.4
(22) Date of filing: 02.06.2015
(51) Int. Cl.: G06F 21/50

(54) **ELECTRONIC DEVICE AND METHOD IN AN ELECTRONIC DEVICE**
ELEKTRONISCHE VORRICHTUNG UND VERFAHREN BEI EINER ELEKTRONISCHEN VORRICHTUNG
DISPOSITIF ÉLECTRONIQUE ET PROCÉDÉ DANS UN DISPOSITIF ÉLECTRONIQUE

(43) Date of publication of application: 28.03.2018
(73) Proprietor: Huawei Technologies Co., Ltd., Shenzhen, Guangdong 518129 (CN)
(72) Inventor: HIRVIMIES, Janne, S-164 40 Kista (SE); SOVIO, Sampo, S-164 40 Kista (SE); MANEA, Valentin, S-164 40 Kista (SE)
(74) Representative: Pfenning, Meinig & Partner mbB
(86) International application number: PCT/EP2015/062236
(87) International publication number: WO 2016/192774

(56) References cited:
- WO-A1-2015/021547
- US-A1- 2008 077 994
- US-A1- 2010 132 012
- US-A1- 2011 078 799
- US-A1- 2012 216 242

## Description

### Technical Field

The present invention relates to an electronic device, corresponding methods and computer program.

### Background

In electronic devices, such as mobile phones, tablets, gaming devices, audio devices, television devices, personal computers, vehicles etc., security policies may be used to control access right to various system or application resources. The security policy system comprises of a set of rules applications in the electronic device should obey.

It is important that the content of the security policy may be trusted by the system, i.e. that the integrity of the policy data may be protected. One solution to this is to provide the security policy hard coded in a portion of a memory of the device which is signed by the Original Equipment Manufacturer (OEM) and thus trusted.

Conventionally, the security policy is included in a boot image of an operating system (OS), such as Linux or Android. The boot image comprises the OS kernel and RAM disk and must be read-only because it must be authenticated and integrity checked every time the device starts. The authenticity and integrity is protected by a cryptographic signature of the boot image.

The shortcoming of this process is that device manufacturers provide one binary - the boot image, which includes both the kernel and the all the files that are read during device start up. The boot image has only one signature. As a consequence of this, changing any file in the boot image must come with a new digital signature from the manufacturer. Since the private key must be kept secret, the signature can only be generated at the location of the manufacturing. This means that there will not be any individual device changes to the binary but a whole class of devices will get the same file without any individualisation.

Thus the security policy is difficult to update, and is not very easy to adopt to different types of devices or to various user needs. For instance there is no easy way to update the policy as platform or device applications are being installed or updated. US 2012/0216242 A1 concerns systems and methods for enhanced security in wireless communication by means of a policy server and a protection core. US 2010/0132012 A1 addresses application of local instance of a general security policy. WO 2015/021547 A1 discloses a system wherein the operation system middleware comprises a Domain Policy Service that verifies a security policy that is to be enforced by the kernel.

### Summary

An objective of embodiments of the present invention is to provide a solution which mitigates or solves the shortcomings of conventional solutions.

The above objectives are solved by the subject matter of the independent claims. Further advantageous implementation forms of the present invention can be found in the dependent claims.

According to a first aspect of the invention an electronic device is provided, the device comprising:
a processor configured to operate a kernel, and
a secure execution environment configured to
receive a security policy,
verify the integrity and authenticity of the security policy,
transmit the verified security policy to the kernel,
wherein the kernel further is configured to apply the verified security policy to the electronic device, characterized in that the secure execution environment is implemented in a discrete circuit separate from the processor.

An advantage with the solution according to the first aspect is that the security policy may be more easily updated while maintaining security, since the updated data package containing the policy is much smaller than the entire OS image. The verification of the integrity and authenticity of the policy is performed in the secure execution environment. Thus an easy and safe mechanism for updating the security policy without a need to perform extensive system configuration update may be obtained. The advantage in such a scenario is that policy changes reach the device faster and in a more reliable way. Another advantage is that policy changes may be made for individual devices, rather than for a full class of devices. The kernel may be a kernel of an operation system. It is advantageous to use a secure execution environment for performing some or all security critical operations in the electronic device, e.g. in view of the large and complex code base than may be included in the kernel of the device, making it vulnerable to attacks. A further advantage is that it is possible to enabling or disabling hardware features in the electronic device on demand. This may allow for downgrading or upgrading device features in the electronic device, like a high quality camera or other peripherals at any time, even without modifying the OS image itself. In a first possible implementation form of the electronic device according to the first aspect the secure execution environment is configured to verify that the verified security policy is applied by the kernel to the electronic device. An advantage is thus that the security of implementation of the policy to the device may be further improved.

In a second possible implementation form of the electronic device according to the first possible implementation form of the first aspect or to the first aspect as such the device further comprises a memory, and wherein the secure execution environment further is configured to receive an update of the security policy from an administration server and store the update in the memory. The memory may be a non-volatile memory which may comprise a read-write file system, suitable for storing the policy. An advantage of this implementation is that the security policy thus may be stored on the device for simple retrieval by the secure execution environment.

In a third possible implementation form of the electronic device according to the second possible implementation form of the first aspect the update is requested by the electronic device and is pulled from the administration server. As an alternative the update is pushed from the administration server to the electronic device. An advantage is thus that an update of the security policy may either be initiated remotely by the administration server and sent to the device and the secure execution environment for verification, or the update may be initiated by a request from the electronic device, such that upon updating application resources on the device.

In a fourth possible implementation form of the electronic device according to the second or third possible implementation forms of the first aspect the administration server is a root administration server, or a delegated administration server wherein the delegated administration server is authorized by the root administration server to provide the update of the security policy to the electronic device. An advantage of this is that the authorization of updating the security policy of electronic devices may be distributed from the root server, e.g. to allow administration servers of partners to update security policies of various electronic devices.

In a fifth possible implementation form of the electronic device according to the second, third or fourth possible implementation forms of the first aspect the operating system kernel is configured to apply the security policy to the electronic device once updated, or at a secure boot sequence. It may be advantageous to be able for the kernel to apply the verified security policy directly once updated, since this avoids the need for system restart. This also reduced the security risk of having a device operating a period of time with an outdated security policy, i.e. being vulnerable. Alternatively the security policy may be applied at the next secure boot sequence.

In a sixth possible implementation form of the electronic device according to the any of the preceding possible implementation forms of the first aspect or to the first aspect as such the operating system kernel is configured to request the secure execution environment to provide a security policy, whereafter the secure execution environment is configured to transmit the verified security policy to the kernel. An advantage is thus that the kernel may be supplied with the latest, updated, security policy upon request, from the secure execution environment.

In a seventh possible implementation form of the electronic device according to the sixth possible implementation form of the first aspect the operating system kernel is configured to request the secure execution environment to provide a security policy after completing a secure boot sequence. An advantage is thus that the kernel may be supplied with the latest, updated, security policy upon secure boot, which may be applied after completing the secure boot sequence.

In an eighth possible implementation form of the electronic device according to the sixth possible implementation form of the first aspect the operating system kernel is configured to request the secure execution environment to provide a security policy at any time on run-time of the electronic device. An advantage is thus that the kernel may be supplied with the latest, updated, security policy during run-time, which may be applied without needing to restart the electronic device.

In a ninth possible implementation form of the electronic device according to any of the preceding possible implementation forms of the first aspect or to the first aspect as such the secure execution environment is configured to receive the security policy in encrypted form. An advantage is thus that the privacy of the user of the electronic device may be protected. Personalized security policies in an electronic device, corporate or user specific policies may contain privacy sensitive data. Alternatively the secure execution environment may be configured to receive the security policy in unencrypted form, thus reducing the need for cryptographic processing of the security policy.

In a tenth possible implementation form of the electronic device according to any of the preceding possible implementation forms of the first aspect or to the first aspect as such the secure execution environment is configured to verify the integrity and authenticity of the received security policy by using digital signatures or Message Authentication Codes, MAC. Thus the verification of the integrity and authenticity of the received security policy may advantageously be performed in the secure execution environment.

In an eleventh possible implementation form of the electronic device according to any of the preceding possible implementation forms of the first aspect or to the first aspect as such the secure execution environment is configured to check the entitlement of the security policy by verifying a certificate of policy authority and signature of the security policy, or by verifying an Access Control List. The advantage of this is that the secure execution environment may verify that the security policy was issued by an authorized entity, entitled to issue a security policy.

In a twelfth possible implementation form of the electronic device according to any of the preceding possible implementation forms of the first aspect or to the first aspect as such the secure execution environment is comprised in the processor, such that the processor comprises a main operating environment configured to host the operating system kernel and wherein the secure execution environment is separated from the main operating environment. An advantage of this is that the secure execution environment may be securely implemented in the processor circuit. The secure execution environment may be a Trusted Execution Environment, TEE. The TEE is a secure area that resides in the processor of the electronic device and enables that sensitive data to be stored, processed and protected in a trusted and secure environment. The TEE is an isolated environment that runs in parallel with the kernel of the operating system. Thus a high level of security may be obtained. Alternatively the secure execution environment may be implemented in a co-processor, in a discrete component. Such a discrete component may be a Secure Element, SE, such as a universal integrated circuit, UICC, an embedded SE or a microSD. The secure execution environment may as a further alternative be implemented in software.

According to a second aspect of the invention, the above mentioned and other objectives are achieved with a method in an electronic device, comprising:
operating a kernel,
providing a secure execution environment,
receiving a security policy in the secure execution environment,
in the secure execution environment, verifying the integrity and authenticity of the security policy,
transmitting the verified security policy to the kernel, and
the kernel applying the verified security policy to the electronic device, characterized in that the secure execution environment is implemented in a discrete circuit separate from the processor.

The kernel may be a kernel of an operating system.

In a first possible implementation form of the electronic device according to the second aspect the secure execution environment verifies that the verified security policy is applied by the kernel to the electronic device.

In a second possible implementation form of the electronic device according to the first possible implementation form of the second aspect or to the second aspect as such the secure execution environment receives an update of the security policy from an administration server and stores the update in a memory.

In a third possible implementation form of the electronic device according to the second possible implementation form of the second aspect the update is requested by the electronic device and is pulled from the administration server. As an alternative the update is pushed from the administration server to the electronic device.

In a fourth possible implementation form of the electronic device according to the second or third possible implementation forms of the second aspect the administration server is a root administration server, or a delegated administration server wherein the delegated administration server is authorized by the root administration server to provide the update of the security policy to the electronic device.

In a fifth possible implementation form of the electronic device according to the second, third or fourth possible implementation forms of the second aspect the operating system kernel applies the security policy to the electronic device once updated, or at a secure boot sequence.

In a sixth possible implementation form of the electronic device according to the any of the preceding possible implementation forms of the second aspect or to the second aspect as such the operating system kernel requests the secure execution environment to provide a security policy, whereafter the secure execution environment transmits the verified security policy to the kernel.

In a seventh possible implementation form of the electronic device according to the sixth possible implementation form of the second aspect the operating system kernel requests the secure execution environment to provide a security policy after completing a secure boot sequence.

In an eighth possible implementation form of the electronic device according to the sixth possible implementation form of the second aspect the operating system kernel requests the secure execution environment to provide a security policy at any time on run-time of the electronic device.

In a ninth possible implementation form of the electronic device according to any of the preceding possible implementation forms of the second aspect or to the second aspect as such the secure execution environment receives the security policy in encrypted form.

In a tenth possible implementation form of the electronic device according to any of the preceding possible implementation forms of the second aspect or to the second aspect as such the secure execution environment verifies the integrity and authenticity of the received security policy by using digital signatures or Message Authentication Codes, MAC.

In an eleventh possible implementation form of the electronic device according to any of the preceding possible implementation forms of the second aspect or to the second aspect as such the secure execution environment checks the entitlement of the security policy by verifying a certificate of policy authority and signature of the security policy, or by verifying an Access Control List.

In a twelfth possible implementation form of the electronic device according to any of the preceding possible implementation forms of the second aspect or to the second aspect as such the secure execution environment is comprised in the processor, such that the processor comprises a main operating environment configured to host the operating system kernel and wherein the secure execution environment is separated from the main operating environment.

According to a third aspect of the invention a computer program is provided comprising program code for performing a method according to the present invention when the computer program runs on a computer. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

The advantages of the methods according to the second aspect and the computer program according to the third aspect correspond to those for the corresponding electronic device according to the first aspect.

Further applications and advantages of the present invention will be apparent from the following detailed description.

An "or" in the description and the corresponding claims is to be understood as a mathematical OR which covers "and" and "or", and is not to be understand as an XOR (exclusive OR).

### Brief Description of the Drawings

The appended drawings are intended to clarify and explain different embodiments of the present invention, in which:
- Fig. 1: shows an electronic device according to an embodiment of the invention.
- Fig. 2: shows a method according to an embodiment of the invention.
- Fig. 3: shows a method and system according to another embodiment of the invention.

### Detailed description

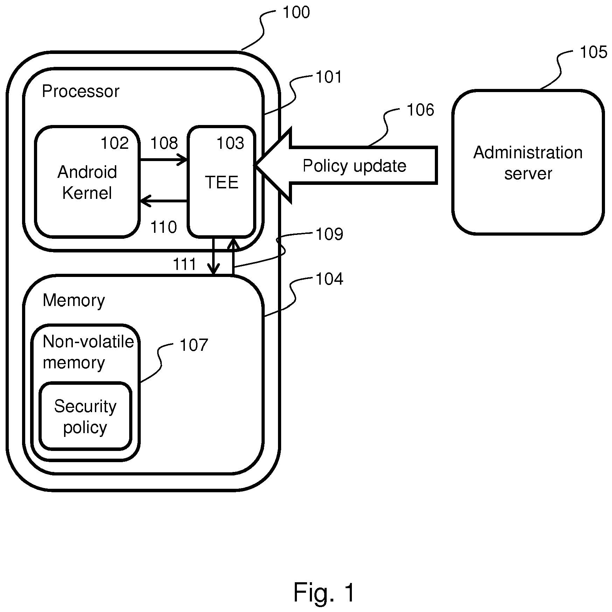

With reference to Fig. 1, an example of an electronic device 100 is shown, comprising a processor 101 and a secure execution environment 103. The processor 101 is configured to operate a kernel 102 of an operating system. The secure execution environment 103 is configured to protect the integrity and authenticity of a security policy of the electronic device 100. The electronic device 100 further comprises a memory 104. The memory is a non-volatile memory having a file system for storing the security policy.

The operating system kernel 102 is configured to request 108 the secure execution environment 103 to provide a security policy. This may be done after completing a secure boot sequence or at any time on run-time of the electronic device 100.

The secure execution environment 103 is configured to retrieve 109 a security policy from the memory 104, and verify the integrity and authenticity of the security policy. The integrity and authenticity of the security is verified by using digital signatures or Message Authentication Codes, MAC. The security policy may be verified by a secure application running in the secure execution environment.

The secure execution environment 103 is configured thereafter to transmit 110 the verified security policy to the kernel 102 for application. The kernel 102 is configured to apply the verified security policy to the electronic device 100. The operating system kernel 102 may be configured to apply the security policy to the electronic device 100 once updated, or at a subsequent secure boot sequence. The application of the security policy to the electronic device 100 by the kernel 102 is verified by the secure execution environment 103.

The secure execution environment 103 is configured to receive an update 106 of the security policy from an administration server 105 and store 111 the update 106 in the memory 104.

Two alternative embodiments of the present invention are provided. The update 106 may be requested by the electronic device 100 and pulled from the administration server 105. This may be the case when an application or system resource in the electronic device is added or altered, wherein this change requires an update of the security policy. Alternatively the update 106 may be pushed from the administration server 105 to the electronic device 100. This may be the case when a central update of the security policy is required.

The secure execution environment 103 may be configured to receive the security policy in encrypted or in unencrypted form. The security policy may be stored in the memory 104 in encrypted form if it is required from a privacy point of view.

When verifying the integrity and authenticity of the security policy, the secure execution environment 103 is further configured to check the entitlement of the security policy. The entitlement is checked in order to verify that the security policy was created by an entity, e.g. a server, which was entitled (i.e. had the right to) create the policy. The entitlement may be checked by verifying a certificate of policy authority and signature of the security policy, or by verifying an Access Control List.

According to the example shown in Fig. 1, the secure execution environment 103 is comprised in the processor, 101. The processor 101 thus comprises a main operating environment configured to host the operating system kernel 102 and the secure execution environment 103 is separated from the main operating environment. The separation of the main operating environment and the secure execution environment is defined in the hardware of the processor 101. In this example the secure execution environment is a Trusted Execution Environment, TEE. The TEE is an isolated environment that runs in parallel with the kernel 102 of the operating system. The TEE is a secure area that resides in the processor 101 of the electronic device 100 and enables that sensitive data to be stored, processed and protected in a trusted and secure environment, e.g. using ARM TrustZone technology.

According to the invention the secure execution environment 103 is implemented in a Secure Element, SE, a discrete circuit separate from the processor 101. According to yet a further alternative not part of the current invention the secure execution environment 103 may be implemented in software.

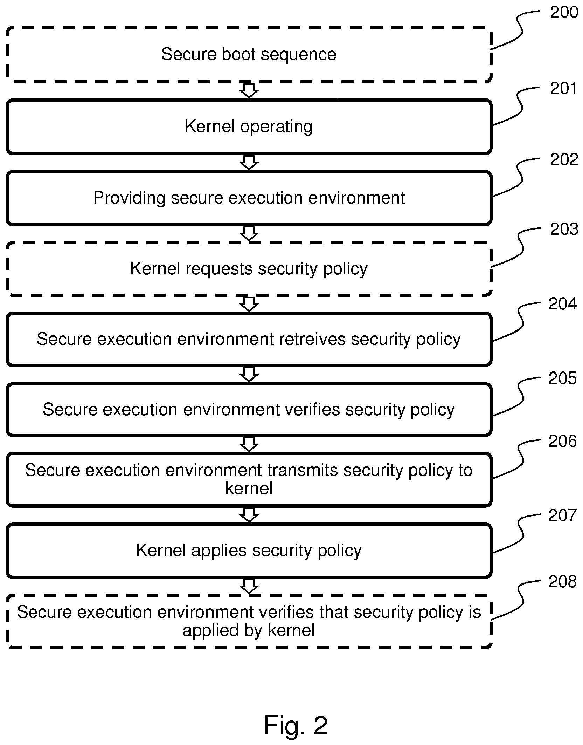

In Fig. 2 an example of a method in an electronic device is shown. In the electronic device 100, a secure boot sequence is performed, 200. A kernel 102 of an operating system is thus operating 201. A secure execution environment 103, such as a TEE, is provided 202 for protecting the integrity and authenticity of a security policy of the device. The kernel requests 203 the secure execution environment to provide the most recent security policy for the device. The secure execution environment 103 retrieves 204 a security policy from a memory of the device. An application in the secure execution environment 103 verifies 205 the integrity and authenticity of the security policy.

Thereafter the verified security policy is transmitted 206 to the kernel 102. The kernel applies 207 the verified security policy to the electronic device 100, thus applying the rules contained in the security policy. The application of the security policy by the kernel is verified 208 by an application in the secure execution environment, to make sure that the policy was applied.

The security policy is updated from an administration server 105. The update may either be pushed or pulled from the administration server. The administration server 105 may communicate directly with the secure execution environment 103 for every electronic device 100 and send updates to the security policy rules during run-time of the electronic device. The update of the security policy is received in the secure execution environment 103. An application in the secure execution environment 103 checks the integrity and authenticity of the security policy, and the entitlement of the administration server 105. The update of the security policy is stored in the memory 104 of the electronic device. The security policy may be stored in encrypted form to protect the privacy of the data.

The update may be received in the secure execution environment 103 from the administration server 105 through a secure communication channel. This will safeguard that the security policy is distributed by an authorized server. The electronic device side end-point of the secure channel is the secure execution environment 103 or an application in the secure execution environment 103. The secure channel is used to authenticate the administration server 105 and the security policy update received. The secure channel protects the integrity of the security policy update and may be confidentially protected. The secure channel may utilize symmetric or asymmetric cryptography, and cryptographic keys to bootstrap the secure channel are provided to the device by suitable key management framework.

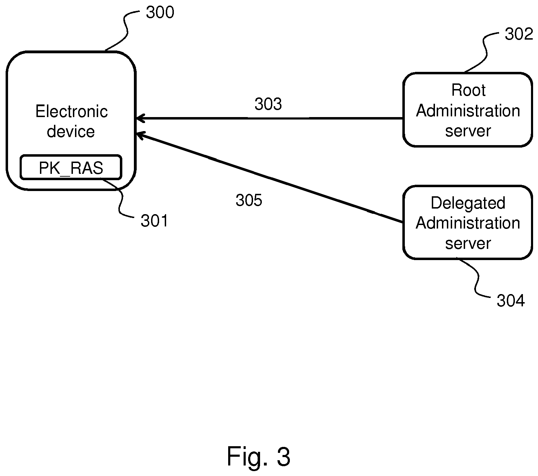

As an alternative, a separate authorization token is provided to the secure execution environment 103. This authorization token is a signed statement specifying rights to provide policy updates or even further delegate rights to provide policy updates. The system and method is illustrated in Fig. 3. First the electronic device 300 receives and installs a Public Key of the Root Administration Server, PK RAS, 301. This may be done in a secure manufacturing facility or by using other well-known security techniques. The Root Administration server 302 is then able to send signed policy statements or Authorization Tokens (AuthToken) 303 allowing a Delegated administration server 304 to sign policy updates. In this case AuthToken is sent and contains a public key of the Delegated Authorization server (DAS), 305. Thereafter the DAS 305 signs the policy update by using its own private key.

Any method according to the present invention may be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the present electronic device comprises the necessary capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processors of the present devices may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the present invention is not limited to the embodiments described above, but also relates to and incorporates all embodiments within the scope of the appended independent claims.

## Claims

1. An electronic device (100) comprising:
a processor (101) configured to operate a kernel (102), and
a secure execution environment (103), configured to
receive a security policy,
verify the integrity and authenticity of the security policy,
transmit the verified security policy to the kernel (102),
wherein the kernel (102) further is configured to apply the verified security policy to the electronic device (100),
**characterized in that**
the secure execution environment (103) is implemented in a discrete circuit separate from the processor (101).

2. The electronic device (100) according to claim 1 wherein the secure execution environment (103) further is configured to verify that the verified security policy is applied by the kernel (102) to the electronic device.

3. The electronic device (100) according to claim 1 or 2, further comprising a memory (104), and wherein the secure execution environment (103) further is configured to receive an update (106) of the security policy from an administration server (105) and store the update (106) in the memory (104).

4. The electronic device (100) according to claim 3, wherein the update (106) is requested by the electronic device (100) and is pulled from the administration server (105), or wherein the update (106) is pushed from the administration server (105) to the electronic device (100).

5. The electronic device (100) according to claim 3 or 4, wherein the administration server is a root administration server, or a delegated administration server wherein the delegated administration server is authorized by the root administration server to provide the update (106) of the security policy to the electronic device.

6. The electronic device (100) according to claim 3, 4 or 5, wherein the operating system kernel (102) further is configured to apply the security policy to the electronic device (100) once updated, or at a secure boot sequence.

7. The electronic device (100) according to any one of the preceding claims, wherein the operating system kernel (102) is configured to request the secure execution environment (103) to provide a security policy, whereafter the secure execution environment (103) is configured to transmit the verified security policy to the kernel (102).

8. The electronic device (100) according to claim 7, wherein the operating system kernel (102) is configured to request the secure execution environment (103) to provide a security policy after completing a secure boot sequence.

9. The electronic device (100) according to claim 7, wherein the operating system kernel (102) is configured to request the secure execution environment (103) to provide a security policy at any time on run-time of the electronic device (103).

10. The electronic device (100) according to any one of the preceding claims, wherein the secure execution environment (103) is configured to receive the security policy in encrypted or in unencrypted form.

11. The electronic device (100) according to any one of the preceding claims, wherein the secure execution environment (103) is configured to verify the integrity and authenticity of the received security policy by using digital signatures or Message Authentication Codes, MAC.

12. The electronic device (100) according to any one of the preceding claims, wherein the secure execution environment (103) further is configured to check the entitlement of the security policy by verifying a certificate of policy authority and signature of the security policy, or by verifying an Access Control List.

13. The electronic device (100) according to any one of the preceding claims, wherein the secure execution environment is comprised in the processor, such that the processor (101) comprises a main operating environment configured to host the operating system kernel (102) and wherein the secure execution environment (103) is separated from the main operating environment.

14. Method in an electronic device (100), comprising:
operating (201) a kernel (102) in a processor (101),
providing (202) a secure execution environment (103),
receiving (204) a security policy in the secure execution environment (103),
in the secure execution environment (103), verifying (205) the integrity and authenticity of the security policy,
transmitting (206) the verified security policy to the kernel (102), and
the kernel applying (207) the verified security policy to the electronic device (100),
**characterized by**
providing (202) the secure execution environment (103) implemented in a discrete circuit separate from the processor (101).

15. Computer program with a program code for performing a method according to claim 14 when the computer program runs on a computer.

## Patentansprüche

1. Elektronische Vorrichtung (100), umfassend:
einen Prozessor (101), der dazu ausgelegt ist, einen "Kernel" (102) zu betreiben, und
eine sichere Ausführungsumgebung (103), die dazu ausgelegt ist,
eine Sicherheitsrichtlinie zu empfangen,
die Integrität und Authentizität der Sicherheitsrichtlinie zu verifizieren,
die verifizierte Sicherheitsrichtlinie an den "Kernel" (102) zu übertragen,
wobei der "Kernel" (102) ferner dazu ausgelegt ist, die verifizierte Sicherheitsrichtlinie auf die elektronische Vorrichtung (100) anzuwenden,
**dadurch gekennzeichnet, dass**
die sichere Ausführungsumgebung (103) in einer diskreten, vom Prozessor (101) getrennten Schaltung implementiert ist.

2. Elektronische Vorrichtung (100) gemäß Anspruch 1, wobei die sichere Ausführungsumgebung (103) ferner dazu ausgelegt ist, zu verifizieren, dass die verifizierte Sicherheitsrichtlinie durch den "Kernel" (102) auf die elektronische Vorrichtung angewendet wird.

3. Elektronische Vorrichtung (100) gemäß Anspruch 1 oder 2, ferner umfassend einen Speicher (104), und wobei die sichere Ausführungsumgebung (103) ferner dazu ausgelegt ist, eine Aktualisierung (106) der Sicherheitsrichtlinie aus einem Verwaltungsserver (105) zu empfangen und die Aktualisierung (106) in dem Speicher (104) zu speichern.

4. Elektronische Vorrichtung (100) gemäß Anspruch 3, wobei die Aktualisierung (106) durch die elektronische Vorrichtung (100) angefordert und aus dem Verwaltungsserver (105) "gepullt" wird oder wobei die Aktualisierung (106) aus dem Verwaltungsserver (105) an die elektronische Vorrichtung (100) "gepusht" wird.

5. Elektronische Vorrichtung (100) gemäß Anspruch 3 oder 4, wobei der Verwaltungsserver ein "Root"-Verwaltungsserver oder ein delegierter Verwaltungsserver ist, wobei der delegierte Verwaltungsserver durch den "Root"-Verwaltungsserver autorisiert ist, die Aktualisierung (106) der Sicherheitsrichtlinie für die elektronische Vorrichtung bereitzustellen.

6. Elektronische Vorrichtung (100) gemäß Anspruch 3, 4 oder 5, wobei der Betriebssystem-"Kernel" (102) ferner dazu ausgelegt ist, die Sicherheitsrichtlinie nach dem Aktualisieren auf die elektronische Vorrichtung (100) oder bei einer sicheren "Boot"-Sequenz anzuwenden.

7. Elektronische Vorrichtung (100) gemäß einem der vorhergehenden Ansprüche, wobei der Betriebssystem-"Kernel" (102) dazu ausgelegt ist, die sichere Ausführungsumgebung (103) aufzufordern, eine Sicherheitsrichtlinie bereitzustellen, woraufhin die sichere Ausführungsumgebung (103) dazu ausgelegt ist, die verifizierte Sicherheitsrichtlinie an den "Kernel" (102) zu übertragen.

8. Elektronische Vorrichtung (100) gemäß Anspruch 7, wobei der Betriebssystem-"Kernel" (102) dazu ausgelegt ist, die sichere Ausführungsumgebung (103) aufzufordern, nach Abschluss einer sicheren "Boot"-Sequenz eine Sicherheitsrichtlinie bereitzustellen.

9. Elektronische Vorrichtung (100) gemäß Anspruch 7, wobei der Betriebssystem-"Kernel" (102) dazu ausgelegt ist, die sichere Ausführungsumgebung (103) aufzufordern, eine Sicherheitsrichtlinie zu einem beliebigen Zeitpunkt während der Laufzeit der elektronischen Vorrichtung (103) bereitzustellen.

10. Elektronische Vorrichtung (100) gemäß einem der vorhergehenden Ansprüche, wobei die sichere Ausführungsumgebung (103) dazu ausgelegt ist, die Sicherheitsrichtlinie in verschlüsselter oder unverschlüsselter Form zu empfangen.

11. Elektronische Vorrichtung (100) gemäß einem der vorhergehenden Ansprüche, wobei die sichere Ausführungsumgebung (103) dazu ausgelegt ist, die Integrität und Authentizität der empfangenen Sicherheitsrichtlinie mittels digitaler Signaturen oder Nachrichtenauthentisierungscodes, MAC, zu verifizieren.

12. Elektronische Vorrichtung (100) gemäß einem der vorhergehenden Ansprüche, wobei die sichere Ausführungsumgebung (103) ferner dazu ausgelegt ist, die Berechtigung der Sicherheitsrichtlinie durch Verifizieren eines Zertifikats der Richtlinienstelle und der Signatur der Sicherheitsrichtlinie oder durch Verifizieren einer Zugriffskontrollliste zu verifizieren.

13. Elektronische Vorrichtung (100) gemäß einem der vorhergehenden Ansprüche, wobei die sichere Ausführungsumgebung im Prozessor enthalten ist, sodass der Prozessor (101) eine Hauptbetriebsumgebung umfasst, die dazu ausgelegt ist, den Betriebssystem-"Kernel" (102) zu "hosten", und wobei die sichere Ausführungsumgebung (103) von der Hauptbetriebsumgebung getrennt ist.

14. Verfahren in einer elektronischen Vorrichtung (100), umfassend:
Betreiben (201) eines "Kernels" (102) in einem Prozessor (101),
Bereitstellen (202) einer sicheren Ausführungsumgebung (103),
Empfangen (204) einer Sicherheitsrichtlinie in der sicheren Ausführungsumgebung (103),
in der sicheren Ausführungsumgebung (103) Verifizieren (205) der Integrität und Authentizität der Sicherheitsrichtlinie,
Übertragen (206) der verifizierten Sicherheitsrichtlinie an den "Kernel" (102), und
Anwenden (207) der verifizierten Sicherheitsrichtlinie auf die elektronische Vorrichtung (100) durch den "Kernel",
**gekennzeichnet durch**
Bereitstellen (202) der sicheren Ausführungsumgebung (103), die in einer vom Prozessor (101) getrennten diskreten Schaltung implementiert ist.

15. Computerprogrammprodukt mit einem Programmcode zum Durchführen eines Verfahrens gemäß Anspruch 14, wenn das Programm auf einem Computer ausgeführt wird.

## Revendications

1. Dispositif électronique (100) comprenant :
un processeur (101) configuré pour faire fonctionner un noyau (102), et
un environnement d'exécution sécurisé (103), configuré pour recevoir une politique de sécurité,
vérifier l'intégrité et l'authenticité de la politique de sécurité,
transmettre la politique de sécurité vérifiée au noyau (102),
le noyau (102) étant en outre configuré pour appliquer la politique de sécurité vérifiée au dispositif électronique (100),
**caractérisé en ce que**
l'environnement d'exécution sécurisé (103) est mis en œuvre dans un circuit discret distinct du processeur (101).

2. Dispositif électronique (100) selon la revendication 1 dans lequel l'environnement d'exécution sécurisé (103) est en outre configuré pour vérifier que la politique de sécurité vérifiée est appliquée par le noyau (102) au dispositif électronique.

3. Dispositif électronique (100) selon la revendication 1 ou 2, comprenant en outre une mémoire (104), et dans lequel l'environnement d'exécution sécurisé (103) est en outre configuré pour recevoir d'un serveur d'administration (105) une mise à jour (106) de la politique de sécurité et stocker la mise à jour (106) dans la mémoire (104).

4. Dispositif électronique (100) selon la revendication 3, dans lequel la mise à jour (106) est demandée par le dispositif électronique (100) et est tirée du serveur d'administration (105), ou dans lequel la mise à jour (106) est poussée du serveur d'administration (105) vers le dispositif électronique (100).

5. Dispositif électronique (100) selon la revendication 3 ou 4, dans lequel le serveur d'administration est un serveur d'administration racine, ou un serveur d'administration délégué, le serveur d'administration délégué étant autorisé par le serveur d'administration racine à fournir la mise à jour (106) de la politique de sécurité au dispositif électronique.

6. Dispositif électronique (100) selon la revendication 3, 4 ou 5, dans lequel le noyau (102) de système d'exploitation est en outre configuré pour appliquer la politique de sécurité au dispositif électronique (100) une fois mise à jour, ou lors d'une séquence de démarrage sécurisé.

7. Dispositif électronique (100) selon l'une quelconque des revendications précédentes, dans lequel le noyau (102) de système d'exploitation est configuré pour demander à l'environnement d'exécution sécurisé (103) de fournir une politique de sécurité, après quoi l'environnement d'exécution sécurisé (103) est configuré pour transmettre la politique de sécurité vérifiée au noyau (102).

8. Dispositif électronique (100) selon la revendication 7, dans lequel le noyau (102) de système d'exploitation est configuré pour demander à l'environnement d'exécution sécurisé (103) de fournir une politique de sécurité après achèvement d'une séquence de démarrage sécurisé.

9. Dispositif électronique (100) selon la revendication 7, dans lequel le noyau (102) de système d'exploitation est configuré pour demander à l'environnement d'exécution sécurisé (103) de fournir une politique de sécurité à n'importe quel moment pendant le temps d'exécution du dispositif électronique (103).

10. Dispositif électronique (100) selon l'une quelconque des revendications précédentes, dans lequel l'environnement d'exécution sécurisé (103) est configuré pour recevoir la politique de sécurité sous forme chiffrée ou non chiffrée.

11. Dispositif électronique (100) selon l'une quelconque des revendications précédentes, dans lequel l'environnement d'exécution sécurisé (103) est configuré pour vérifier l'intégrité et l'authenticité de la politique de sécurité reçue en utilisant des signatures numériques ou des codes d'authentification de message, MAC.

12. Dispositif électronique (100) selon l'une quelconque des revendications précédentes, dans lequel l'environnement d'exécution sécurisé (103) est en outre configuré pour vérifier le droit de la politique de sécurité en vérifiant un certificat d'autorité de politique et une signature de la politique de sécurité, ou en vérifiant une liste de contrôle d'accès.

13. Dispositif électronique (100) selon l'une quelconque des revendications précédentes, dans lequel l'environnement d'exécution sécurisé est compris dans le processeur, de telle sorte que le processeur (101) comprenne un environnement d'exploitation principal configuré pour héberger le noyau (102) de système d'exploitation et l'environnement d'exécution sécurisé (103) étant distinct de l'environnement d'exploitation principal.

14. Procédé dans un dispositif électronique (100), comprenant :
le fait de faire fonctionner (201) un noyau (102) dans un processeur (101),
la fourniture (202) d'un environnement d'exécution sécurisé (103),
la réception (204) d'une politique de sécurité dans l'environnement d'exécution sécurisé (103),
dans l'environnement d'exécution sécurisé (103), la vérification (205) de l'intégrité et de l'authenticité de la politique de sécurité,
la transmission (206) de la politique de sécurité vérifiée au noyau (102), et
l'application (207) par le noyau de la politique de sécurité vérifiée au dispositif électronique (100),
**caractérisé par**
la fourniture (202) de l'environnement d'exécution sécurisé (103) mis en œuvre dans un circuit discret distinct du processeur (101).

15. Programme informatique avec un code de programme pour mettre en œuvre un procédé selon la revendication 14 lorsque le programme informatique s'exécute sur un ordinateur.
